# EUROPEAN PATENT SPECIFICATION

(11) **EP 2 259 396 B1**
(45) Date of publication and mention of the grant of the patent: **25.05.2016**
(21) Application number: 10354016.7
(22) Date of filing: 29.03.2010
(51) Int. Cl.: H02B 1/052

(54) **Assembly for locking a component on a rail**
Anordnung zum Arretieren einer Komponente an eine Schiene
Ensemble pour bloquer un composant sur un rail

(30) Priority: 05.06.2009 IN CH13322009
(43) Date of publication of application: 08.12.2010
(73) Proprietor: Schneider Electric Industries SAS, 92500 Rueil-Malmaison (FR)
(72) Inventor: Patra, Prasanta Kumar, 38050 Grenoble Cedex 09 (FR); Kulkarni, Jitendra, 38050 Grenoble Cedex 09 (FR); Satyanarayanan, Karthik, 38050 Grenoble Cedex 09 (FR); Lebeau, Bernard, 38050 Grenoble Cedex 09 (FR)
(74) Representative: Colette, Marie-Françoise

(56) References cited:
- EP-A1- 1 460 720
- EP-A2- 0 874 433
- WO-A1-2005/041374
- DE-A1- 19 709 815

## Description

### BACKGROUND OF THE INVENTION

The present invention relates to a locking assembly for use on an electrical or electronic component to be mounted on a rail, like a modular switchgear put in place in an electrical cabinet.

### STATE OF THE ART

A large number of electrical installation systems have individual, usually modular, components mounted on a support so as to be easily reachable. Number of solutions have been developed and used for mounting components such as electrical apparatuses, in enclosures. These systems use various conduit and rail structures for channeling the component and the wires to and from the components in a neat and orderly manner to facilitate installation and servicing. DIN rails are one popular type of system based on a standard set of flanged rails that can be cut to a desired length and attached to the interior of an enclosure. The rails have either inwardly or outwardly projecting flanges in a raised position along its length for receiving the components. The components, including a wide array of modular elements such as terminal blocks, input/output modules, dip switches, etc. feature corresponding structures designed to interface with the rail flanges to hold the components securely in place during installation and use.

Components mounted on the rail are either screw-down or screwless styles. Screw-down structures generally placed on the DIN rail may be slid along the rail for positioning. A screw is then held over one of the rail and driven into the flange to fasten the component in place. In addition to the complexity of installation, a disadvantage of these structures is the need to independently secure each component via the screw. This process is not only time consuming, but may result in misalignment on the rail due to twisting of the component under the influence of the screw-down torque and physical force exerted in drilling the screws.

Therefore, in many applications, the screwless mounting arrangements are often preferable. These arrangements include a component module having a hook-shaped rigid foot that is slipped over a first of the rail flanges, and a deformable leg that is then snapped over the opposite flange to secure the component to the rail. Because the modules are typically made of a moldable plastic material due to its good electrical insulation capabilities, metallic clips and the like are often provided in the rail interface features to bind the component more securely in place on the rail. For removal, the deformable leg may be bent free of the rail flange and the component may be removed by unhooking the rigid foot from the opposite flange.

While such known screwless DIN rail mounting structures provide an attractive solution to the problem of quickly and easily attaching components in desired rail locations, they are not without drawbacks. For example, known arrangements of this type employ differently configured securing elements on either side of the module: see e.g. EP 0 437 124, EP 0 715 383 EP 1 328 051, EP 1 401 070, EP 1 460 720. These elements are added to the molded module during an assembly process, such as by heat staking. It becomes difficult to snap into place and to remove from the rail since they are fitted with means of specialized components. There is a need, therefore, for an improved arrangement for mounting components along DIN rails.

### SUMMARY OF THE INVENTION

Among other advantages, an object of the invention is to remedy shortcomings of existing locking devices associated with electrical components, e.g. circuit-breaker with mold cases, for mounting on rails, in particular DIN rails. The arrangement should be of a straightforward design that can be easily manufactured and assembled on the rail. In particular, a DIN rail mounting structure should provide good holding force while minimizing the complexity of working.

According to one of its features, the invention relates to a locking assembly for locking a component on a rail comprising a sliding means and a locking means connected by an engaging means. The engaging means has an angular profile movable along a variable rotational axis to convert the vertically exerted force on the slider into a horizontal force on the locking means so that the vertical movement of sliding means causes one end of the angularly profiled engaging means connected to the slider to rotationally move the engaging means, thereby causing movement of the other end of the engaging means connected to the locking means into a locking or unlocking position.

Specific embodiments of the invention are defined in appended claims.

### BRIEF DESCRIPTION OF THE DRAWINGS

Other advantages and features will become more clearly apparent from the following description of particular embodiments of the invention, given for illustrative and non-restrictive example purposes only and represented in the accompanying drawings.
Figure 1 represents an electrical component with a locking assembly according to a preferred embodiment of the present invention.
Figures 2A and 2B show the preferred locking assembly.
Figures 3A to 3D illustrate the various steps of a preferred embodiment for mounting the locking assembly on a mold case.
Figures 4A and 4B show the engaged and disengaged positions of an assembly according to the invention on the rail.

### DETAILED DESCRIPTION OF A PREFERRED EMBODIMENT

An electrical component 1 like a modular switchgear, or any auxiliary like a tripping unit or any other protection apparatus like a contactor, is mounted on a rail 2 like a DIN rail. To this purpose, a face of the case 4 of the component 1 comprises a recess 6 with adapted means 8 for engaging the rail 2. According to the invention, a locking assembly 10 is mounted in the case 4, along two adjacent faces, for locking the component 1 on the rail 2.

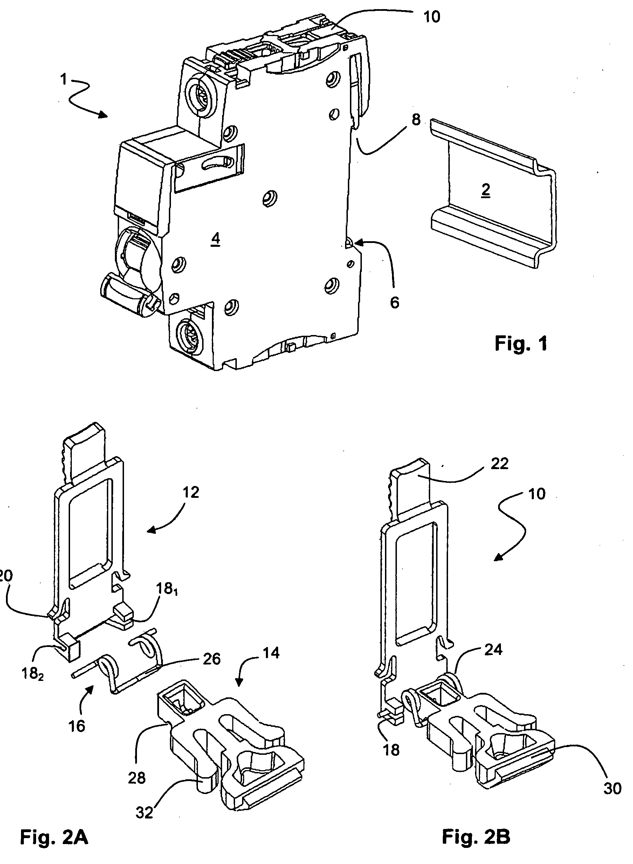

As shown in figures 2, the locking assembly 10 comprises a sliding means 12 which is accessible upon a front face of the component 1, opposite to the rail 2, a locking means 14 adapted for engagement with the rail 2, and an engaging means 16 which connects the sliding means 12 and the locking means 14.

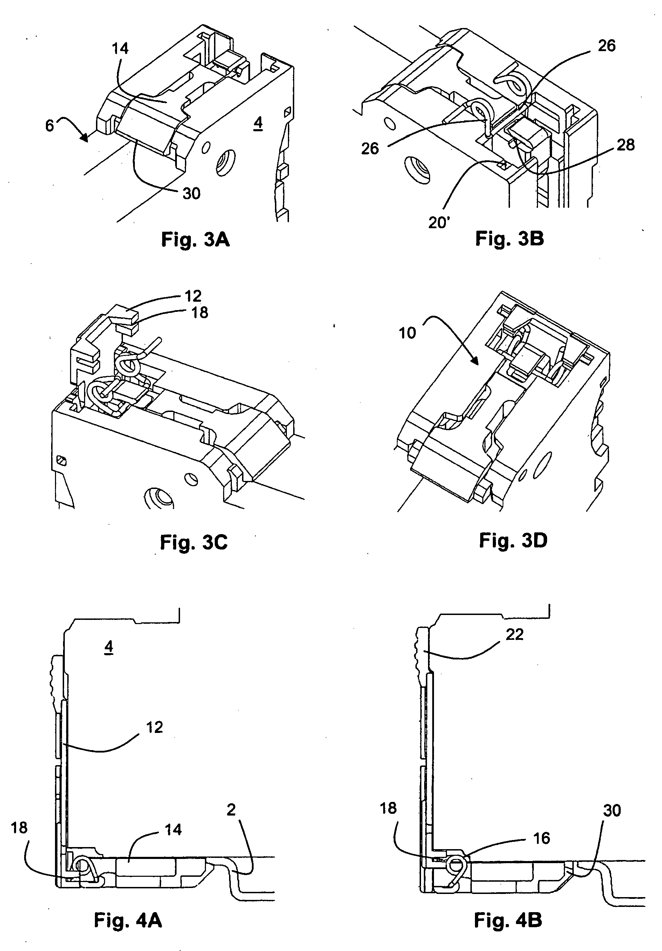

The sliding means is preferably a slider 12 provided with means for connection 18 of the engaging means 16 at one extremity, which means 18 are preferably slots. A first type of slot 18₁ may be provided on one side of the slider 12 and define an open guide shaped to provide the access on the outside of the case 2; a second type of slot 18₂ may be shaped with a closed front end snap and a back opening located on the opposite face of the slider 12 such as to provide better hold of the engaging means 16. The present embodiment provides both possible slots 18 to protect the engaging means 16 from moving of the slider 12. However, other options are possible, depending among others on the nature of the engaging means 16 (see also figure 3).

The slider 12 is also provided with guiding means 20, in form of a protuberance on the side part, which enable guiding of the slider 12 through adapted means of the component 1, like a groove 20' on the casing 4. The slider 12 is provided with a handle 22 on the extremity opposite to the engaging means 16 for gripping.

As shown in figures 2, the preferred embodiment of the present invention utilizes a rod 16 as an engaging means. The rod 16 is shaped with a U profile and/or a V profile based on the applied force and thus called a UV rod. The UV rod 16 comprises two springs 24 to form a V profile or a U profile which ends are connected to each other through a stem 26 to form one single unit 16. Only one end of each spring 24 is connected through the slots 18 to the slider 12 as per the present embodiment, but it is possible for other embodiments to include two independent V profile springs. Further the UV rod 16 may even consist of a single spring means placed at the centre to perform the same function. The spring 24 is selected based on required tensile strength.

The locking clip 14 comprises means like a slot 28 at an extremity to engage the engaging means 16. The slot 28 is designed with a closed front end and with a hook design to provide a better hold of the stem 26 of the engaging means 16. At its opposite extremity, the clip 14 comprises means for engaging a rail 2, which may be shaped as a nose 30, to protrude in the recess. The clip 14 as defined has lead-in means 32 for cooperating with a guide in the casing 4 such that the locking clip 14 slides into the guide, e.g. a groove, for its extremity opposite to the engaging means 16.

A preferred embodiment of the mounting of locking assembly 10 is provided herewith, wherein figures 3A to 3D show the steps of assembling it to the component 1. For clarity purposes, the description will be made by considering the use position of the component 1, wherein the rail 2 is horizontal and the locking assembly 10 can be activated through the top face of the component 1. Firstly, the locking clip 14 is slid into the grooves provided at the bottom of the component 1 on its casing 4 as shown in figure 3A. The stem 26 of the UV rod 16 is then placed in the slot 28 provided on the locking clip 14 as shown in figure 3B. The slider 12 is then inserted into the guide 20' provided in the side of the component 1 on the casing 4 as shown in the figure 3C. When inserted partially and when at an optimum level, the slider 12 is assembled with UV rod 16 by placing the other ends of the UV rod 16 into the slots 18 available on the bottom of the slider 12. The ends of the UV rod 16 are positioned such that they are inline with the parallel guide provided with the case 4. The case 4 of the component 1 provides a parallel guide for the clip 14 to avoid mismatch of angle. With the clip 14, UV rod 16 and slider 12 once connected, the slider 12 is pushed further into the guide within the case 4 till all the elements completely sit into the component 1, providing the required L shaped locking assembly 10 as defined in figure 3D. A closing plate (not shown), as e.g. a T-plate, may then be fitted to the locking clip 14 to close the slot 28 and restrict the UV rod 16 from downward movement and thus stopping the slider's 12 downward movement and disassembling the locking assembly 10.

This preferred method for mounting the locking means 10 allows a very late assembly on the electrical device 1 so that it is possible to adjust the presence of locking means 10 depending on the use of the device 1, but other mounting processes are possible.

At the first instance for engaging the component 1 on the DIN rail 2, the slider 12 is pushed downward in vertical direction along the guide and this action pushes one end of the UV rod 16. This vertical force exerted on the UV rod 16 is converted into a horizontal force due to the profile of the UV rod 16. The other end 26 of the UV rod 16 being connected to the locking clip 14 pushes the clip 14 towards the DIN rail 2. At exertion of an optimum vertical force on the slider 12 the UV rod 16 fully engages and the clip locks with the DIN rail 2, as shown in figure 4A.

At lock position the UV rod 16 is compressed and the profile forms a U due to the force exerted by the locking. However since the other end of the UV rod 16 is now connected to the slider 12 and placed at the same level of the clip 14 and within a slot on the casing 4 of the component 1, this avoids further movement causing a tensile force on the spring 24 and avoids the locking clip 14 from moving backwards This force of the UV rod 16 provides the locking force to be exerted on the nose 30 with the DIN rail 2.

During disengagement, the same steps are followed as during engagement, but in the reverse order, as shown in figure 4B. To disengage the locking clip 14, the slider 12 is pulled vertically upward and the pull force exerted by the slider 12 is transferred on the UV rod 16 which now acts as a mechanical link. Due to the force exerted on the UV rod 16 on the outward direction of the profile by the pull force on both the ends, the UV rod 16 changes into a V profile. At being applied an optimum pulling force on the slider 12, the other end of the UV rod 16 being connected to the locking clip 14 drag the locking clip backward from its unlocking position. This pulls the locking head 30 away from the DIN rail flanges 2 to unlock from the DIN rail 2.

To reengage the component 1 on the DIN rail 2, the slider 12 is pushed downward vertically along the guide and this action pushes one end of the UV rod 16. This vertical force exerted on the UV-rod is converted into a horizontal force due to the profile of the UV-rod. Due to the force exerted on the UV rod 16 on the inward direction of the profile due to the push force on both the ends, it changes into a U profile. The other end 26 of the UV rod 16 being connected to the locking clip 14 pushes the clip 14 towards the DIN rail 2 leading to locking of the component 1 with the DIN rail 2.

Although the invention has been described with reference to a locking assembly 10 for a modular circuit breaker 1, it is not limited thereto and other types of electrical components 1 may be concerned by the invention. Moreover, the foregoing description of the preferred embodiment of the present invention has been presented for purposes of illustration and description. Obviously, many modifications and variations will be apparent to practitioners skilled in this art: the embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated.

## Claims

1. A locking assembly (10) for locking a component (1) on a rail (2) comprising a sliding means (12) and a locking means (14) connected by an engaging means (16) having a first end connected to the sliding means (12) and a second end connected to the locking means (14), wherein the sliding means (12), respectively the locking means (14), may be moved by translation along a first, respectively second, direction, the first and second directions being sensibly orthogonal to each other, **characterised in that** the projection the engaging means (16) in the plane defined by the first and second translation directions has an angular profile between the first and second ends, said angular profile comprising a variable rotational axis to convert a first force exerted on the sliding means (12) in the first direction into a second force exerted on the locking means (14) in the second direction, such that the translation movement of sliding means (12) in the first direction causes the first end of the engaging means (16) connected to the sliding means (12) to rotationally move the engaging means (16), thereby causing a translation movement of the second end (26) of the engaging means (16) connected to the locking means (14) in the second direction.

2. The assembly according to claim 1, wherein the engaging means (16) comprises resilient members (24).

3. The assembly according to claim 2, wherein the resilient members (24) are connected to each other by a stem (26) forming the second end of the engaging means (16) connected to the locking means (14).

4. The assembly according to one of claims 1 to 3, wherein the engaging means (16) may take a U profile and a V profile depending on the force exerted on the sliding means (12) such as to provide tensile force to the locking means (14) in an extended locking position.

5. The assembly according to any of claims 1 to 4 wherein the sliding means (12) comprises a slider with a handle (22) at a first extremity and connecting means (18) at the other extremity.

6. The assembly according to claim 5 wherein the connecting means (18) of the slider (12) comprises two slots (18₁, 18₂) and the first end of the engaging means (16) comprises two extremities suitable to be inserted in the slots (18₁, 18₂) for assembly.

7. The assembly according to any of claims 1 to 6 wherein the locking means (14) comprises a locking clip with a first extremity comprising a nose (30) for engaging a rail (2) and a second extremity comprising connecting means (28).

8. The assembly according to claim 7 wherein the connecting means (28) of the locking clip (14) comprises a groove and the second end of the engaging means (16) comprises a stem (16) suitable to engage with the groove (28).

9. The assembly according to any of claims 1 to 8 wherein the sliding means (12) and/or the locking means (14) comprise means (20, 32) for guided movement in the case (4) of the component (1).

10. An electrical component (1) comprising a case (4) with six main faces and a locking assembly (10) according to any of claims 1 to 9 located on two orthogonal faces of the case (4).

11. The electrical component according to claim 10 wherein the two orthogonal faces comprise guiding means (20') for the translation of the sliding means (12) and the locking means (14).

12. The electrical component according to any of claims 10 or 11 further comprising a closing plate which can be put on the case (4) at the engaging means (16).

## Patentansprüche

1. Arretieranordnung (10) zum Arretieren eines Bauteils (1) an einer Schiene (2), umfassend ein Schiebemittel (12) und ein Arretiermittel (14), die durch ein Eingriffsmittel (16) verbunden sind, von dem ein erstes Ende mit dem Schiebemittel (12) verbunden ist und ein zweites Ende mit dem Arretiermittel (14) verbunden ist, wobei das Schiebemittel (12) bzw. das Arretiermittel (14) translatorisch entlang einer ersten bzw. zweiten Richtung verschoben werden kann, wobei die erste und die zweite Richtung im Wesentlichen orthogonal zueinander verlaufen, **dadurch gekennzeichnet, dass** die Auskragung des Eingriffsmittels (16) in der durch die erste und die zweite Translationsrichtung definierten Ebene ein Winkelprofil zwischen dem ersten und dem zweiten Ende aufweist, wobei das Winkelprofil eine variable Drehachse umfasst, um eine auf das Schiebemittel (12) in die erste Richtung ausgeübte erste Kraft in eine auf das Arretiermittel (14) in die zweite Richtung ausgeübte zweite Kraft umzuwandeln, so dass die Translationsbewegung des Schiebemittels (12) in die erste Richtung bewirkt, dass das mit dem Schiebemittel (12) verbundene erste Ende des Eingriffsmittels (16) das Eingriffsmittel (16) drehbewegt, wodurch eine Translationsbewegung des mit dem Arretiermittel (14) verbundenen zweiten Endes (26) des Eingriffsmittels (16) in die zweite Richtung bewirkt wird.

2. Anordnung nach Anspruch 1, wobei das Eingriffsmittel (16) elastische Glieder (24) umfasst.

3. Anordnung nach Anspruch 2, wobei die elastischen Glieder (24) durch einen Schaft (26) miteinander verbunden sind, der das mit dem Arretiermittel (14) verbundene zweite Ende des Eingriffsmittels (16) bildet.

4. Anordnung nach einem der Ansprüche 1 bis 3, wobei das Eingriffsmittel (16) in Abhängigkeit von der auf das Schiebemittel (12) ausgeübten Kraft ein U-Profil und ein V-Profil annehmen kann, um in einer ausgedehnten Arretierposition eine Zugkraft für das Arretiermittel (14) bereitzustellen.

5. Anordnung nach einem der Ansprüche 1 bis 4, wobei das Schiebemittel (12) einen Schieber mit einem Griff (22) an einem ersten äußeren Ende und einem Verbindungsmittel (18) an dem anderen äußeren Ende umfasst.

6. Anordnung nach Anspruch 5, wobei das Verbindungsmittel (18) des Schiebers (12) zwei Schlitze (18₁, 18₂) umfasst und das erste Ende des Eingriffsmittels (16) zwei äußere Enden umfasst, die zum Einführen in die Schlitze (18₁, 18₂) zur Montage geeignet sind.

7. Anordnung nach einem der Ansprüche 1 bis 6, wobei das Arretiermittel (14) eine Arretierklemme mit einem ersten äußeren Ende, das eine Nase (30) zur Ineingriffnahme einer Schiene (2) umfasst, und einem zweiten äußeren Ende, das ein Verbindungsmittel (28) umfasst, umfasst.

8. Anordnung nach Anspruch 7, wobei das Verbindungsmittel (28) der Arretierklemme (14) eine Nut umfasst und das zweite Ende des Eingriffsmittels (16) einen Schaft (16), der zum Eingriff mit der Nut (28) geeignet ist, umfasst.

9. Anordnung nach einem der Ansprüche 1 bis 8, wobei das Schiebemittel (12) und/oder das Arretiermittel (14) Mittel (20, 32) für eine geführte Bewegung im Mantel (4) des Bauelements (1) umfasst/umfassen.

10. Elektrisches Bauelement (1), das einen Mantel (4) mit sechs Hauptflächen und eine Arretieranordnung (10) nach einem der Ansprüche 1 bis 9, die an zwei orthogonalen Flächen des Mantels (4) positioniert ist, umfasst.

11. Elektrisches Bauelement nach Anspruch 10, wobei die beiden orthogonalen Flächen Führungsmittel (20') für das translatorische Verschieben des Schiebemittels (12) und des Arretiermittels (14) umfassen.

12. Elektrisches Bauelement nach Anspruch 10 oder 11, ferner umfassend eine Schließplatte, die am Eingriffsmittel (16) auf dem Mantel (4) angeordnet werden kann.

## Revendications

1. Ensemble de blocage (10) pour bloquer un composant (1) sur un rail (2), comprenant un moyen coulissant (12) et un moyen de blocage (14) connectés par un moyen d'engagement (16) ayant une première extrémité connectée au moyen coulissant (12) et une deuxième extrémité connectée au moyen de blocage (14), le moyen coulissant (12), respectivement le moyen de blocage (14), pouvant être déplacés par translation le long d'une première, respectivement d'une deuxième, direction, la première et la deuxième direction étant sensiblement perpendiculaires l'une à l'autre, **caractérisé en ce que** la projection du moyen d'engagement (16) dans le plan défini par la première et la deuxième direction de translation présente un profil angulaire entre la première et la deuxième extrémité, ledit profil angulaire comprenant un axe de rotation variable pour convertir une première force exercée sur le moyen coulissant (12) dans la première direction en une deuxième force exercée sur le moyen de blocage (14) dans la deuxième direction, de telle sorte que le mouvement de translation du moyen coulissant (12) dans la première direction provoque le déplacement en rotation du moyen d'engagement (16) par la première extrémité du moyen d'engagement (16) connectée au moyen coulissant (12), pour ainsi provoquer un mouvement de translation de la deuxième extrémité (26) du moyen d'engagement (16) connectée au moyen de blocage (14) dans la deuxième direction.

2. Ensemble selon la revendication 1, dans lequel le moyen d'engagement (16) comprend des organes élastiques (24).

3. Ensemble selon la revendication 2, dans lequel les organes élastiques (24) sont connectés les uns aux autres par une tige (26) formant la deuxième extrémité du moyen d'engagement (16) connectée au moyen de blocage (14).

4. Ensemble selon l'une quelconque des revendications 1 à 3, dans lequel le moyen d'engagement (16) peut adopter un profil en U et un profil en V en fonction de la force exercée sur le moyen coulissant (12) de manière à fournir une force de traction au moyen de blocage (14) dans une position de blocage étendue.

5. Ensemble selon l'une quelconque des revendications 1 à 4, dans lequel le moyen coulissant (12) comprend un coulisseau avec une poignée (22) au niveau d'une première extrémité et un moyen de connexion (18) à l'autre extrémité.

6. Ensemble selon la revendication 5, dans lequel le moyen de connexion (18) du coulisseau (12) comprend deux fentes (18₁, 18₂) et la première extrémité du moyen d'engagement (16) comprend deux extrémités aptes à être insérées dans les fentes (18₁, 18₂) en vue de l'assemblage.

7. Ensemble selon l'une quelconque des revendications 1 à 6, dans lequel le moyen de blocage (14) comprend une pince de blocage avec une première extrémité comprenant un nez (30) pour l'engagement d'un rail (2) et une deuxième extrémité comprenant un moyen de connexion (28).

8. Ensemble selon la revendication 7, dans lequel le moyen de connexion (28) de la pince de blocage (14) comprend une gorge et la deuxième extrémité du moyen d'engagement (16) comprend une tige (16) apte à s'engager avec la gorge (28).

9. Ensemble selon l'une quelconque des revendications 1 à 8, dans lequel le moyen coulissant (12) et/ou le moyen de blocage (14) comprennent des moyens (20, 32) pour un mouvement guidé dans le boîtier (4) du composant (1).

10. Composant électrique (1) comprenant un boîtier (4) avec six faces principales et un ensemble de blocage (10) selon l'une quelconque des revendications 1 à 9 situé sur deux faces orthogonales du boîtier (4).

11. Composant électrique selon la revendication 10, dans lequel les deux faces orthogonales comprennent des moyens de guidage (20') pour la translation du moyen coulissant (12) et du moyen de blocage (14).

12. Composant électrique selon l'une quelconque des revendications 10 ou 11, comprenant en outre une plaque de fermeture qui peut être placée sur le boîtier (4) au niveau du moyen d'engagement (16).
